# EUROPEAN PATENT SPECIFICATION

(11) **EP 2 277 956 B1**
(45) Date of publication and mention of the grant of the patent: **30.11.2016**
(21) Application number: 09746661.9
(22) Date of filing: 15.05.2009
(51) Int. Cl.: C09D 11/00, B41J 2/01, B41M 5/00

(54) **ENERGY RAY-CURABLE INKJET INK COMPOSITION**
MIT ENERGIESTRAHLEN HÄRTBARE TINTENSTRAHL-TINTENZUSAMMENSETZUNG
COMPOSITION D'ENCRE DURCISSABLE PAR RAYONNEMENT D'ÉNERGIE

(30) Priority: 16.05.2008 JP 2008129812
(43) Date of publication of application: 26.01.2011
(73) Proprietor: Hitachi Maxell, Ltd., Ibaraki-shi Osaka 567-8567 (JP)
(72) Inventor: KITO, Katsuyuki, Ibaraki-shi Osaka 567-8567 (JP); KOBAYASHI, Satoshi, Ibaraki-shi Osaka 567-8567 (JP); KOYAMA, Kunihiko, Ibaraki-shi Osaka 567-8567 (JP)
(74) Representative: dompatent von Kreisler Selting Werner - Partnerschaft von Patent- und Rechtsanwälten mbB
(86) International application number: PCT/JP2009/059036
(87) International publication number: WO 2009/139455

(56) References cited:
- WO-A2-02/38688
- JP-T- 2001 525 479
- JP-T- 2004 522 813
- JP-T- 2004 532 144
- JP-T- 2005 504 860

## Description

### Technical Field

The present patent application claims a priority of Japanese Patent Application No. 2008-129812, entirety of which is incorporated herein by reference.

The present invention relates to an energy ray-curable inkjet ink composition. Particularly, the present invention relates to an inkjet ink composition suitable for applications requiring that a printed film has stretchability after curing, such as a marking film which is used for decorating vehicles, ships, advertising displays, and wall surfaces of buildings having a three-dimensional shaped surface including irregularities and curved surfaces, and three-dimensional steric display members on which a printed material is sterically formed after printing.

### Background Art

A marking film, for example, a car wrapping film used for decorating vehicles etc. is generally manufactured by forming a printed film for decoration on one surface of a polymer substrate including a vinyl chloride resin sheet etc. with an ink, and laminating a releasing sheet on the other surface through a adhesive layer interposed therebetween. Since the marking film can be directly bonded to materials to be decorated, such as vehicles etc., and is excellent in workability, it has been becoming widespread as a substitute method for a conventional marking method by painting. In addition, for example, a three-dimensional steric display member such as an electrical advertising display is manufactured by printing a printed film including various characters and images on a substrate, and sterically molding a printed material with a molding machine.

In the aforementioned marking film application, when the marking film is bonded to a material to be decorated, a releasing sheet is peeled, and a adhesive layer is adhered to a surface of the material to be decorated, but since a surface of a material to be decorated such as a vehicle etc. is in a three-dimensional shape of irregularities and curved surfaces, wrinkles are generated on the marking film, the air easily enters between the marking film and the material to be decorated, and deteriorated appearance is easily generated. For this reason, it is necessary to apply the marking film to a surface of a material to be decorated while the marking film is stretched and, thereupon, a printed film may be stretched in a predetermined length together with a substrate in some cases. In addition, also in application in which a printed material such as a three-dimensional steric display member is sterically molded, a printed film may be stretched together with a substrate by bending at molding in some cases. For this reason, in these applications, an ink which does not cause cracking and peeling even when a printed film is stretched (for example, 130 % or more) has been demanded.

In addition, upon formation of the aforementioned printed film, a printing system by an inkjet system which does not require a plate making step, and is suitable for variable printing of many models in small quantities is utilized and, for this reason, it is necessary to use an ink which has a low viscosity, is excellent in the continuous discharge property and has the liquid physical property suitable for printing by an inkjet system. From the above viewpoint, an aqueous or solvent inkjet ink, which uses a dye or a pigment as a coloring a material, has a low viscosity and has stretchability, for satisfying stretchability for a printed film and the continuous discharge property by an inkjet system has been mainly used.

However, the aqueous inkjet ink has a problem that when printed on a non-water-absorptive substrate such as a polymer substrate, deteriorated image formation easily occurs due to low attachment of ink liquid droplets, and a problem that since drying of an aqueous solvent is extremely slow, it is necessary to dry the aqueous solvent without laminating marking films immediately after printing. In addition, since the marking film is on the premise that it is used outdoors, there is also a problem that water resistance is inferior in the case of the aqueous inkjet ink. On the other hand, in the solvent inkjet ink, printing suitability on a non-water-absorptive substrate such as a polymer substrate, and water resistance are excellent, but since it is necessary to dry an organic solvent, there is a problem that not only it takes a time for drying, but also exhaust equipments for vaporizing an organic solvent, and a solvent recovery mechanism must be provided.

As an inkjet ink for industrial printing, in addition to the aqueous and solvent inkjet inks, a solvent-free energy ray-curable inkjet ink which cures an ink with an energy ray such as an ultraviolet ray has been developed (e.g. Patent Document 1). Since this kind of energy ray-curable inkjet ink generates a radical by irradiation of an energy ray, and causes polymerization, a reaction proceeds very fast, and curability is excellent. In addition, since a solvent is not used, the ink has advantages that adherability to a substrate, and the quick drying property are excellent and, at the same time, environmental pollution is small. For this reason, it is conceivable that the aforementioned energy ray-curable inkjet ink is used in place of the aqueous or solvent inkjet ink even in an application of the aforementioned marking film or the like, but since the energy ray-curable inkjet ink cures a printed film by a polymerization reaction of a polymerizable compound, from the necessity of use of a polymerizable compound having as better curability as possible, a hard printed film having no stretchability, as proposed in Patent Document 1, has been demanded. Therefore, a printed film formed using the energy ray-curable inkjet ink is fundamentally impossible to be stretched, and cracking and peeling are easily generated in the printed film by stretching.

A study for imparting softness to a printed film using the energy ray-curable inkjet ink has also been performed, and an energy ray-curable inkjet ink containing a reactive diluent and a reactive oligomer as polymerizable compounds, in which both of grass transition temperatures of a polymer of the single reactive diluent and a polymer of the single reactive oligomer are -25 to 70°C has also been proposed (e.g. Patent Document 2).

However, even the energy ray-curable inkjet ink as in Patent Document 2 has a problem that occurrence of cracking and peeling of a printed film cannot be suppressed, in an application in which a printed film together with a substrate is stretched 130 % or more after curing of a marking film and a three-dimensional steric display member.

In addition, as a means for curing the aforementioned energy ray-curable inkjet ink, a low pressure mercury lamp, a high pressure mercury lamp, a super-high pressure mercury lamp, a xenon lamp and a metal halide lamp have been used, but since heat is easily generated when an ultraviolet ray is irradiated by these irradiating means, curling and waving are easily generated on a substrate, in an application such as a marking film in which a polymer substrate is used. For this reason, recently, use of low energy irradiating means such as ultraviolet ray LED and ultraviolet ray laser having small size and producing little heat, in place of the aforementioned mercury lamp and metal halide lamp, has been proposed, but the energy ray-curable inkjet ink described in Patent Documents 1 and 2 has a problem that sufficient curability and adherability cannot be obtained by the low energy irradiating means. In order to improve curability and adherability, it is also conceivable that a content of a polyfunctional polymerizable compound having many ethylenic double bonds is increased and, in this case, an ink has a further high viscosity and, at the same time, a printed film becomes hard, resulting in further reduction of stretchability.
Patent Document 1: Japanese Patent No.3619778
Patent Document 2: JP-A No. 2004-131725

### Disclosure of the Invention

### Problems to be Solved by the Invention

The present invention has been made in order to solve the aforementioned problems, and an object of the present invention is to provide an energy ray-curable inkjet ink composition which does not cause cracking and peeling on a printed film and has excellent stretchability even when an energy ray-curable inkjet ink is applied to utility case where a printed film together with a substrate is stretched after printing of a marking film and a three-dimensional steric display film and, at the same time, is excellent in curability and adherability even when a low energy irradiating means is used, and is excellent in the continuous discharge property upon printing by an inkjet system.

### Means for Solving the Problems

The present invention relates to an energy ray-curable inkjet composition capable of stretching a printed film after curing, which includes at least:
a coloring material,
a monofunctional monomer (A) having a glass transition temperature of lower than -25°C when a single monomer is polymerized, and having one ethylenic double bond,
a difunctional oligomer (B) having an elongation rate of 130 % or more at 25°C when a single oligomer is polymerized, and having two ethylenic double bonds,
at least one kind of a photopolymerization initiator (C) selected from the group consisting of an acylphosphine oxide initiator (C-1), and a mixed initiator (C-2) of an α-aminoalkylphenone initiator and a thioxanthone initiator, and
a surface tension conditioner (D), wherein
a content of the monofunctional monomer (A) is 8 to 70% by mass, and a content of the difunctional oligomer (B) is 15 to 40% by mass, relative to the whole composition.

Since the ink composition contains a monofunctional monomer (A) having a low glass transition temperature, and having little reaction points, and a difunctional oligomer (B) having a high elongation rate at predetermined amounts, respectively, a printed film in which cracking and peeling are hardly caused even by stretching can be formed. In addition, the monofunctional monomer (A) and the difunctional oligomer (B) have low reactivity due to a small number of functional groups in one molecule, but by using these polymerizable compounds, and at least one kind of a photopolymerization initiator (C) selected from the group consisting of an acylphosphine oxide initiator (C-1), and a mixed initiator (C-2) of an α-aminoalkylphenone initiator and a thioxanthone initiator, a printed film excellent in curability and adherability can be formed even by irradiation of a low energy. The viscosity of the ink composition is easily increased by containing the difunctional oligomer (B) having a high elongation rate, but since the ink composition contains the monofunctional monomer (A) at a predetermined amount, it can attain a low viscosity suitable for an inkjet system. Furthermore, since the ink composition contains the monofunctional monomer (A) and the difunctional oligomer (B) at predetermined amounts and, at the same time, contains a surface tension conditioner (D), it has surface tension suitable for an inkjet system.

It is preferable that the difunctional oligomer (B) has a weight average molecular weight of 800 to 8,000. Since a difunctional oligomer of a high molecular weight has great elongation, an ink composition further excellent in stretchability can be obtained.

It is preferable that the surface tension conditioner (D) contains at least a silicone compound having a polydimethylsiloxane structure and, particularly, it is preferable that it contains a silicone compound having an ethylenic double bond in a molecule. Since the silicone compound has the great surface tension decreasing effect, and has reactivity, it can improve curability and adherability.

The ink composition may further contain a hindered amine compound (F) having a 2,2,6,6-tetramethylpiperidinyl group as an antigelling agent. In the ink composition, polymerization is easily initiated by heat or light at storage, and for this reason, storage stability is easily reduced, but when the hindered-amine based compound is used, an ink composition excellent in curability and adherability can be obtained while storage stability is maintained.

### Effects of the Invention

As described above, according to the present invention, an energy ray-curable inkjet ink composition which does not cause cracking and pealing on a printed film, and has excellent stretchability even in an application in which a printed film together with a substrate is stretched after printing of a marking film and a three-dimensional steric display member and, at the same time, is excellent in curability and adherability even when a low energy irradiation means is used, and is excellent in the continuous discharge property upon printing by an inkjet system can be provided.

### Best Mode for Carrying out the Invention

The energy ray-curable inkjet ink composition of the present invention contains a monofunctional monomer (A) having a glass transition temperature of lower than -25°C, preferably -54°C or lower when a single monomer is polymerized, and having one ethylenic double bond, at 8 to 70% by mass, preferably 40 to 60% by mass relative to the whole composition. The glass transition temperature of the single monomer means a glass transition temperature measured in a case where a mixture obtained by mixing the monofunctional monomer (A), and 1-hydroxy-cyclohexyl-phenylketone as an initiator (mass ratio of monofunctional monomer (A)/initiator: 97/3) is irradiated with an ultraviolet ray having an integral light quantity of 1,000 mJ/cm² to form a polymer, and this polymer is measured with a differential thermal measuring apparatus (TG-DTA(2000S), manufactured by Mac Science). Examples of the commercially available initiator include IRGACURE 184 manufactured by Ciba. By using the monofunctional monomer (A) having a low glass transition temperature, an ink composition which suppresses occurrence of cracking and pealing on a printed film, and is excellent in stretchability, also in an application in which a printed film together with a substrate is stretched 130% or more after curing can be obtained. When the glass transition temperature is - 25°C or higher, a printed film having sufficient stretchability cannot be formed, and cracking and pealing easily occur when the printing film is stretched after curing. In addition, it is preferred that the glass transition temperature of the monofunctional monomer (A) is as lowe as possible since a printed film excellent in strecheability can then be formed. However, since the options of the monofunctional monomer (A) are narrowed, the glass transition temperature is preferably -60°C or higher.

In addition, since the monofunctional monomer (A) is a reactive monomer having a small number of functional groups, which has one ethylenic double bond in one molecule, the viscosity of the resulting ink composition can be reduced and, at the same time, since the number of reaction points with other polymerizable compounds at polymerization is small, the properties of the difunctional oligomer (B) having a high elongation rate can be sufficiently exerted. A polyfunctional monomer having two or more ethylenic double bonds in one molecule is excellent in reactivity, but when only the polyfunctional monomer is used as a monomer, polymerization of a difunctional oligomer and the polyfunctional monomer proceeds, and the hardness of a printed film becomes too high, resulting in that high stretchability required in a marking film etc. cannot be satisfied. In addition, since the polyfunciton monomer has a high viscosity, when a large amount of the polyfunctional monomer is contained, the continuous discharge property is also easily reduced. Furthermore, when a single polyfunctional monomer is polymerized, a polymer having a high glass transition temperature is easily formed, and the hardness is easily increased. When the content of the monofunctional monomer (A) is less than 8%, in the ink composition of the present invention which contains a large amount of an oligomer in order to impart high strecthability to a printed film, a viscosity is increased, and it becomes difficult to adjust the viscosity to a viscosity of 55 mPa·s or less suitable for an inkjet system. For this reason, the content of the monofunctional monomer (A) is preferably 8% by mass or more, more preferably 40% by mass or more. On the other hand, when the content of the monofunctional monomer (A) is more than 70% by mass, curability and adherability are decreased due to reduction in reactivity. For this reason, the content of the monofunctional monomer (A) is preferably 70% by mass or less, more preferably 60% by mass or less.

Specific examples of the monofunctional monomer (A) include isoamyl acrylate, isooctyl acrylate, isodecyl acrylate, lauryl acrylate, tridecyl acrylate, isomyristyl acrylate, 2-(2-ethoxyethoxy)ethyl acrylate, methoxypolyethylene glycol (350) monoacrylate, methoxypolyethylene glycol (550) monoacrylate, alkoxylated tetrahydrofurfuryl acrylate, alkoxylated uryl acrylate, ethoxyethoxyphenyl acrylate, and methoxytriethylene glycol acrylate. These may be used alone, or by mixing a plurality of them. In addition, the monomer may be substituted with a functional group such as phosphorus or fluorine. Among them, since isooctyl acrylate, 2-ethylhexyl acrylate, and tridecyl acrylate have a low viscosity, they are particularly preferable.

The ink composition of the present invention contains the difunctional oligomer (B) having an elongation rate of 130% or more, preferably 150% or more at 25°C when a single oligomer is polymerized, and having two ethylenic double bonds, at 15 to 40% by mass relative to the whole composition. The elongation rate of the single oligomer means breakage elongation measured in a case where a solution (viscosity: 100 to 200 mPa·s) obtained by mixing the difunctional oligomer (B), 1-hydroxy-cyclohexyl-phenylketone as an initiator (mass ratio of difunctional oligomer (B)/ initiator: 97/3), and methyl ethyl ketone as a diluted solvent is formed into a uniform film on a teflon sheet using a bar coater, this is dried in a chamber at 60°C for 5 minutes, and then irradiated with an ultraviolet ray having an integral light quantity of 1,000 mJ/cm² to form a polymer (thickness:50 to 60 µm, length:50 mm, width : 10 mm), and the polymer is stretched under 25°C at a tensile rate of 1 cm/s. By using the difunctional oligomer (B) having a high elongation rate, a printed film which suppresses occurrence of cracking and pealing on a printed film even in an application in which a printed film together with a substrate is stretched 130% or more after curing, and is excellent in stretchability can be obtained. When the elongation rate is less than 130%, even when the monofunctional monomer (A) having a low glass transition temperature and a small amount of reaction points is contained, a printed film having sufficient stretchability cannot be formed, and cracking and pealing easily occur when the printed film is stretched after curing. In addition, it is preferred that an oligomer having a greater elongation rate is more excellent in stretchability. However, since the options of the difunctional oligomer (B) are narrowed, the elongation rate is preferably up to around 200%.

In addition, in order to realize all of reduction in viscosity of an ink composition, and curability and adherability, the difunctional oligomer (B) has two ethylenic double bonds in one molecule. Since the ink composition of the present invention contains the monofunctional monomer (A) having a small amount of reaction points for reduction in viscosity, when only an oligomer in which the number of ethylenic double bond in one molecule is 1, that is, a monofunctional oligomer is used as an oligomer, reactivity is reduced, and curability and adherability are easily decreased by low energy irradiation. On the other hand, when only an oligomer in which the number of ethylenic double bond in one molecule is 3 or more, that is, a higher polyfunctional oligomer is used as an oligomer, reactivity is improved, but stretchability is decreased and, at the same time, the continuous discharge property is decreased due to an increase in viscosity.

When the content of the difunctional oligomer (B) is less than 15% by mass, stretchability of the resulting printed film is decreased, and cracking and pealing easily occur. On the other hand, when the content of the difunctional oligomer (B) is more than 40% by mass, the viscosity of the ink composition is increased, and the continuous discharge property is decreased.

In addition, the weight average molecular weight of the difunctional oligomer (B) is preferably 800 to 8,000, more preferably 1,200 to 2,500. By using the difunctional oligomer (B) of a high molecular weight, stretchability can be further improved. The weight average molecular weight is a weight average molecular weight in terms of polystyrene, when a single oligomer is measured by gel permeation chromatography (GPC) (solvent: tetrahydrofuran). In addition, it is preferable that the difunctional oligomer (B) is an aliphatic oligomer. The aliphatic oligomer has greater elongation due to its molecular structure as compared with an aromatic oligomer, and can form a printed film excellent in stretchability.

Specific examples of the difunctional oligomer (B) include a urethane acrylate oligomer, a polyester acrylate oligomer, and an epoxy acrylate oligomer. Examples of the commercially available difunctional oligomer (B) include EBECRYL210, EBECRYL230, EBECRYL270, EBECRYL284, EBECRYL264, EBECRYL265, EBECRYL8402, EBECRYL8804, EBECRYL8807, EBECRYL3708, EBECRYL745, KRM8098, KRM7735, and KRM8296 manufactured by DAICEL-CYTEC Company Ltd., and CN980, CN981, CN982, CN991, CN996, CN9001, CN9002, CN9004, CN9007, CN9009, CN9014, CN9178, CN9893, CN971, CN973, and CN2256 manufactured by Sartomer. These may be used alone, or by mixing a plurality of them.

The ink composition of the present invention, if it contains at least the monofunctional monomer (A) and the difunctional oligomer (B) within the aforementioned ranges, may further contain a monofunctional monomer having a glass transition temperature of -25°C or higher as a polymerizable compound. The monofunctional monomer having a high glass transition temperature can be used in such a range that other properties are not deteriorated, and a content of the monofunctional monomer is preferably 1 to 30% by mass, more preferably 1 to 10% by mass relative to the whole composition. Specific examples of the monofunctional monomer include phenoxyethylene glycol acrylate, and tetraethylene glycol diacrylate. These may be used alone, or by mixing a plurality of them. In addition, the ink composition of the present invention may further contain a bi or more-functional polyfunctional monomer as a polymerizable compound. By containing the polyfunctional monomer at 1 to 20% by mass, preferably 1 to 10% by mass relative to the whole composition, curability, and film strength can be improved. Specific examples of the polyfunctional monomer include hydroxypivalic acid neopentyl glycol di(meth)acrylate, polytetramethylene glycol di(meth)acrylate, trimethylolpropane (meth)acrylic acid benzoic acid ester, diethylene glycol di(meth)acrylate, triethylene glycol di(meth)acrylate, tetraethylene glycol di(meth)acrylate, polyethylene glycol (200) di(meth)acrylate, polyethylene glycol (400) di(meth)acrylate, polyethylene glycol (600) di(meth)acrylate, polyethylene glycol (1000) di(meth)acrylate, dipropylene glycol di(meth)acrylate, tripropylene glycol di(meth)acrylate, polypropylene glycol (400) di(meth)acrylate, polypropylene glycol (700) di(meth)acrylate, neopentyl glycol di(meth)acrylate, 1,3-butanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A ethylene oxide adduct di(meth)acrylate, and bisphenol A propylene oxide adduct di(meth)acrylate. These may be used alone, or by mixing a plurality of them. Furthermore, the ink composition of the present invention may further contain a polyfunctional oligomer having an elongation rate of less than 130% as a polymerizable compound. By containing the polyfunctional oligomer having a low elongation rate at 1 to 20% by mass, preferably 1 to 10% by mass relative to the composition, curability and film strength can be improved. Examples of the commercially available polyfunctional oligomer include ACTILANE250 manufactured by Across.

The ink composition of the present invention contains at least one kind of a photopolymerization initiator (C) selected from the group consisting of an acylphosphine oxide initiator (C-1), and a mixed initiator (C-2) of an α-aminoalkylphenone initiator and a thioxanthone initiator in order to initiate polymerization by a low energy irradiating means. By using the photopolymerization initiator, curability and adherability of a polymerizable compound containing the monofunctional monomer (A) and the difunctional oligomer (B) can be improved.

Specific examples of the acylphosphine oxide initiator include 2,4,6-trimethylbenzoyldiphenylphosphine oxide, 2,6-dimethoxybenzoyldiphenylphosphine oxide, 2,6-dichlorobenzoyldiphenylphosphine oxide, 2,3,5,6-tetramethylbenzoyldiphenylphosphine oxide, 2,6-dimethylbenzoyldiphenylphosphine oxide, 4-methylbenzoyldiphenylphosphine oxide, 4-ethylbenzoyldiphenylphosphine oxide, 4-isopropylbenzoyldiphenylphosphine oxide, 1-methylcyclohexanoylbenzoyldiphenylphosphine oxide, bis(2,4,6-trimethylbenzoyl)-phenylphosphine oxide, 2,4,6-trimethylbenzoylphenylphosphinic acid methyl ester, 2,4,6-trimethylbenzoylphenylphosphinic acid isopropyl ester, and bis(2,6-dimethoxybenzoyl)-2,4,4-trimethylpentylphosphine oxide. These may be used alone, or by mixing a plurality of them. Examples of the commercially available acylphosphine oxide initiator include DAROCURE TPO manufactured by Ciba.

Specific examples of the α-aminoalkylphenone initiator include 2-methyl-1(4-methylthiophenyl)phenyl]-2-morpholinopropane-1-one, and 2-benzyl-2-dimethylamino-1-(4-morpholinophenyl)butanone-1,2-methyl-1-[4-(methoxythio)-phenyl]-2-morpholinopropane-2-one. These may be used alone, or by mixing a plurality of them. Examples of the commercially available α-aminoalkylphenone initiator include IRGACURE 369, and IRGACURE 907 manufactured by Ciba.

Specific examples of the thioxanthone initiator include thioxanthone, 2-methylthioxanthone, 2-ethylthioxanthone, 2-isopropylthioxanthone, 4-isopropylthioxanthone, 2-chlorothioxanthone, 2,4-dimethylthioxanthone, 2,4-diethylthioxanthone, 2,4-dichlorothioxanthone, and 1-chloro-4-propoxythioxanthone. These may be used alone, or by mixing a plurality of them. Examples of the commercially available thioxanthone initiator include KAYACURE DETX-S manufactured by Nippon Kayaku Co., Ltd., and CHIVACURE ITX-S manufactured by Double Bond Chemical.

The contents of the acylphosphine oxide initiator (C-1), and the mixed initiator (C-2) of the α-aminoalkylphenone initiator and the thioxanthone initiator in the ink composition are usually 5 to 15% by mass as expressed by a total amount, relative to the whole composition, depending on the content of the polymerizable compound such as the monofunctional monomer (A) and the difunctional oligomer (B). When these contents are less than 5% by mass, curability and adherability are easily decreased by low energy irradiation. On the other hand, when these contents exceed 15% by mass, an unreacted component remains, and printing quality is easily deteriorated. Particularly, it is preferable that 40 to 99% by mass of the α-aminoalkylphenone initiator, and 1 to 60% by mass of the thioxanthone initiator are contained in the total amount of the photopolymerization initiator (C). When the photopolymerization initiator containing the α-aminoalkylphenone initiator and the thioxanthone initiator within the aforementioned ranges is used, an ink composition further excellent in curability and adherability can be obtained.

As the photopolymerization initiator (C), in addition to the initiator (C-1) and the mixed initiator, a conventionally publicly known initiator may be further contained. Examples of the photopolymerization initiator include an aryl alkyl ketone initiator, an oxime ketone initiator, an acyl phosphonate initiator, an S-phenyl thiobenzoate initiator, a titanocene initiator, an aromatic ketone initiator, a benzyl initiator, a quinone derivative initiator, and a ketocoumarin initiator. However, since as the content of these initiators increases, reactivity is reduced, it is preferred that the content is 0.5 to 5% by mass as a total amount relative to the whole composition.

The ink composition of the present invention contains a surface tension conditioner (D). Examples of the suitable surface tension conditioner (D) include a silicone compound having a polydimethylsiloxane structure. When the silicone compound is used as a surface tension conditioner, liquid physical properties such as surface tension of the ink composition can be adjusted within a range suitable for an inkjet system.

Specific examples of the silicone compound include BYK-300, BYK-302, BYK-306, BYK-307, BYK-310, BYK-315, BYK-320, BYK-322, BYK-323, BYK-325, BYK-330, BYK-331, BYK-333, BYK-337, BYK-344, BYK-370, BYK-375, BYK-377, BYK-UV3500, BYK-UV3510, and BYK-UV3570 manufactured by BYK-Chemie, TEGO-RAD 2100, TEGO-RAD2200N, TEGO-RAD2250, TEGO-RAD2300, TEGO-RAD2500, TEGO-RAD2600, and TEGO-RAD2700 manufactured by Degussa, and Glanol 100, Glanol 115, Glanol 400, Glanol 410, Glanol 435, Glanol 440, Glanol 450, B-1484, Polyflow ATF-2, KL-600, UCR-L72, and UCR-L93 manufactured by Kyoeisha Chemical Co.,Ltd. These may be used alone, or by mixing a plurality of them. Among them, BYK-UV3500, BYK-UV3510, and BYK-UV3570 manufactured by BYK-Chemie, TEGO-RAD2100, TEGO-RAD2200N, TEGO-RAD2250, TEGO-RAD2300, TEGO-RAD2500, TEGO-RAD2600, and TEGO-RAD2700 manufactured by Degussa, and UCR-L72, and UCR-L93 manufactured by Kyoeisha Chemical Co., Ltd. are preferable. Since these contain a polydimethylsiloxane structure having an ethylenic double bond in the molecule, adherability can be further improved.

The content of the surface tension conditioner (D) in the ink composition is preferably 2.5% by mass or less, more preferably 0.02 to 2.5% by mass or less relative to the whole content. When the content of the surface tension conditioner (D) is more than 2.5% by mass, an undissolved material may be generated, and foaming may be caused in some cases.

The ink composition may contain a conventionally publicly known surface tension conditioner in addition to the aforementioned silicone compound. Specific examples of the surface tension conditioner include Emulgen manufactured by Kao Corporation.

In the present invention, the ink composition may use conventionally known various dyes as a coloring material and, from a viewpoint of weather resistance, it is preferable that any or both of an inorganic pigment, and an organic pigment are used.

Specific examples of the inorganic pigment include titanium oxide, zinc flower, zinc oxide, lithopone, iron oxide, aluminum oxide, silicon dioxide, kaolinite, montmorillonite, talc, barium sulfate, calcium carbonate, silica, alumina, Cadmium Red, colcothar, Molybdenum Red, Chrome vermillion, Molybdate Orange, chrome yellow, Chrome Yellow, Cadmium Yellow, yellow iron oxide, Titan Yellow, chromium oxide, viridian, Cobalt Green, Titanium Cobalt Green, Cobalt Chrome Green, ultramarine, Ultramarine Blue, Prussian Blue, Cobalt Blue, Cerulean Blue, Manganese Violet, Cobalt Violet, and mica.

Specific examples of the organic pigment include azo, azomethine, polyazo, phthalocyanine, quinacridone, anthraquinone, indigo, thioindigo, quinophthalone, benzimidazolone, and isoindoline organic pigments. Alternatively, carbon black consisting of acidic, neutral or basic carbon may be used. Furthermore, a hollow particle of a crosslinked acrylic resin may be used as an organic pigment.

Specific examples of the pigment having a cyan color include C.I. Pigment Blue 1, C.I. Pigment Blue 2, C.I. Pigment Blue 3, C.I. Pigment Blue 15:3, C.I. Pigment Blue 15:4, C.I. Pigment Blue 16, C.I. Pigment Blue 22, and C.I. Pigment Blue 60. Among them, from the viewpoint of weather resistance and coloring power, either or both of C.I. Pigment Blue 15:3 and C.I. Pigment Blue 15:4 are preferable.

Specific examples of the pigment having a magenta color include C.I. Pigment Red 5, C.I. Pigment Red 7, C.I. Pigment Red 12, C.I. Pigment Red 48 (Ca), C.I. Pigment Red 48 (Mn), C.I. Pigment Red 57 (Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, C.I. Pigment Red 209, C.I. Pigment Red 254, and C.I, Pigment Violet 19. Among them, from the viewpoint of weather resistance and coloring power, at least one kind selected from the group consisting of C.I. Pigment Red 122, C.I. Pigment Red 202, C.I. Pigment Red 209, C.I. Pigment Red 254, and C.I. Pigment Violet 19 is preferable.

Specific examples of the pigment having a yellow color include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 120, C.I. Pigment Yellow 128, C.I. Pigment Yellow 129, C.I. Pigment Yellow 130, C.I. Pigment Yellow 138, C.I. Pigment Yellow 139, C.I. Pigment Yellow 147, C.I. Pigment Yellow 150, C.I. Pigment Yellow 151, C.I. Pigment Yellow 154, C.I. Pigment Yellow 155, C.I. Pigment Yellow 180, C.I. Pigment Yellow 185, C.I. Pigment Yellow 213, and C.I. Pigment Yellow 214. Among them, from the viewpoint of weather resistance, at least one kind selected from the group consisting of C.I. Pigment Yellow 74, C.I. Pigment Yellow 83, C.I. Pigment Yellow 109, C.I. Pigment Yellow 110, C.I. Pigment Yellow 120, C.I. Pigment Yellow 128, C.I. Pigment Yellow 138, C.I. Pigment Yellow 139, C.I. Pigment Yellow 150, C.I. Pigment Yellow 151, C.I. Pigment Yellow 154, C.I. Pigment Yellow 155, C.I. Pigment Yellow 213, and C.I. Pigment Yellow214 is preferable.

Specific examples of the pigment having a black color include HCF, MCF, RCF, LFF and SCF manufactured by Mitsubishi Chemical Corporation; Monarch and Regal manufactured by Cabot; Color Black, Special Black, and Printex manufactured by Degussa-Huels; Toka Black manufactured by Tokai Carbon Co., Ltd.; and Raven manufacture by Columbia. Among them, at least one kind selected from the group consisting of HCF#2650, HCF#2600, HCF#2350, HCF#2300, MCF#1000, MCF#980, MCF#970, MCF#960, MCF88, LFFMA7, MA8, MA11, MA77, and MA100 manufactured by Mitsubishi Chemical Corporation, and Printex 95, Printex 85, Printex 75, Printex 55, and Printex 45 manufactured by Degussa Huels is preferable.

The content of the coloring material in the ink composition is preferably 1 to 10% by mass, more preferably 2 to 7% by mass, most preferably 3 to 6% by mass relative to the whole composition. When the content of the coloring material is too small, there is a tendency that image coloring power is reduced. On the other hand, when the content of the coloring material is too large, the viscosity of the ink composition is increased and flowability is easily deteriorated.

When a pigment is used as the coloring material, a pigment derivative and a pigment dispersant may be further used in order to improve dispersibility of the pigment. Specific examples of the pigment derivative include a pigment derivative having a dialkylaminoalkyl group, and a pigment derivative having a dialkylaminoalkylsulfonic acid amide group. Specific examples of the pigment dispersant include ionic or nonionic surfactants, and anionic, cationic or nonionic polymer compounds. Among them, from the viewpoint of dispersion stability, a polymer compound containing a cationic group or an anionic group is preferable. Examples of the commercially available pigment dispersant include SOLSPERSE manufactured by Lubrizol Corporation, DISPERBYK manufactured by BYK-Chemie, and EFKA manufactured by EFKA Additives. The contents of the pigment derivative and the pigment dispersant in the ink composition are preferably 0.05 to 5% by mass, respectively, relative to the whole composition.

It is preferable that the ink composition of the present invention further contains a hindered amine compound (F) having a 2,2,6,6-tetramethylpiperidinyl group. When the hindered amine compound (F) is contained together with the monofunctional monomer (A), the difunctional oligomer (B), and the photopolymerization initiator (C), an ink composition excellent in storage stability can be obtained without decreasing curability of the ink composition. Specific examples of the hindered amino compound (F) include bis(1-oxyl-2,2,6,6-tetramethylpiperidin-4-yl) sebacate, bis(2,2,6,6-tetramethyl-1-(octyloxy)-4-piperidinyl) decanedioate. These may be used alone, or by mixing a plurality of them. Among them, bis(1-oxyl-2,2,6,6-tetramethylpiperidin-4-yl) sebacate is preferable. Examples of the commercially available hindered amine compound (F) include IRGASTAB UV-10, and TINUVIN 123 manufactured by Ciba.

The content of the hindered amine compound (F) in the ink composition is preferably 0.01 to 3% by mass, more preferably 0.2 to 2% by mass relative to the whole composition. When the content of the hindered amine compound (F) is less than 0.01% by mass, a radical generated at storage cannot be sufficiently captured, and there is a tendency that storage stability is reduced. On the other hand, when the content of the hindered amino compound (F) is more than 3% by mass, there is a tendency that the effect of capturing a radical is saturated and, at the same time, a polymerization reaction at energy ray irradiation is inhibited.

The ink composition may further contain, as an antigelling agent, other hindered amine compounds, phenol antioxidants, phosphorus antioxidants, and hydroquinone monoalkyl ethers. Specific examples of the antigelling agent include hydroquinone monomethyl ether, hydroquinone, t-butylcatechol, pyrogallol, and TINUVIN 111 FDL, TINUVIN 144, TINUVIN 292, TINUVIN XP40, TINUVIN XP60, and TINUVIN 400 manufactured by Ciba. The content of these antigelling agents in the ink composition is preferably 0.1 to 4% by mass as expressed by a total amount, relative to the whole composition.

The ink composition of the present invention may further contain, as an optional component, publicly known general additives such as a surfactant, a leveling agent, an anti-foaming agent, an antioxidant, a pH conditioner, a charge imparting agent, a bactericidal agent, an antiseptic agent, a deodorant, a charge conditioner, a wetting agent, an anti-skinning agent, and a perfume, if necessary.

As a method of preparing the ink composition, conventionally publicly known preparation methods can be used, but when a pigment is used as a coloring agent, the following preparation method is preferable.

First, a mixture obtained by pre-mixing a coloring agent, a part of the monofunctional monomer (A) and the difunctional oligomer (B) which are polymerizable compounds and, if necessary, a pigment dispersant is prepared, and this mixture is dispersed by a dispersing machine to prepare a primary dispersion. Specific examples of the dispersing machine include a disper; container driving medium mills such as a ball mill, a centrifugation mill, and a planetary ball mill; high speed rotating mills such as a sand mill; and medium stirring mills such as a stirring tank-type mill.

Then, the remaining polymerizable compound, the photopolymerization initiator (C), the surface tension conditioner (D) and, if necessary, other additives such as the hindered amine compound (F) are added to the primary dispersion, and the materials are uniformly mixed using a stirrer. Specific examples of the stirrer include a three one motor, a magnetic stirrer, a disper, and a homogenizer. Alternatively, the ink composition may be mixed using a mixing machine such as a line mixer. For the purpose of further finely-dividing particles in the ink composition, the ink composition may be mixed using a dispersing machine such as a bead mill or a high pressure jet mill.

When a pigment is used as the coloring material, the dispersion average particle diameter of pigment particles in the ink composition is preferably 20 to 200 nm, more preferably 50 to 160 nm. When the dispersion average particle diameter is less than 20 nm, since the particles are small, there is a tendency that weather resistance of a printed material is reduced. On the other hand, when the dispersion average particle diameter exceeds 200 nm, there is a tendency that fineness of a printed material is reduced.

According to the present invention, since the monofunctional monomer (A), and the difunctional oligomer having a high elongation rate (B) are contained, respectively, at predetermined amounts, an ink composition having a low viscosity of 43 to 55 mPa·s at 25°C can be prepared. In addition, since the polymerizable compound, and the surface tension conditioner (D) are contained, an ink composition suitable for an inkjet system having a surface tension of 25 to 31 mN/m can be prepared. For this reason, in the ink composition of the present invention, phenomena such as nozzle removal hardly occur, and the continuous discharge property is excellent.

In addition, the ink composition of the present invention does not need to be diluted with a diluting solvent, has a low viscosity even when the composition is not warmed, and further, is good in pigment dispersibility when the coloring agent is pigment, and has such good dispersion stability that disadvantages such as an increase in viscosity during storage and during use, and sedimentation of a pigment are not caused. For this reason, in an inkjet system, stable discharge is achieved at room temperature without warming an ink.

When a marking film such as a car wrapping film is manufactured, the marking film can be manufactured, for example by printing an ink composition in a predetermined pattern on one surface of a substrate including a polymer resin such as a vinyl chloride resin, polyethylene terephthalate, and polycarbonate by an inkjet system, and laminating a adhesive layer and a releasing sheet on the other surface of the substrate. In addition, when a three-dimensional steric display member which sterically molds a printed material is manufactured, similarly, the three-dimensional steric display member can be manufactured, for example, by printing an ink composition in a predetermined pattern on one surface of a polymer substrate by an inkjet system, and sterically molding the printed material into a desired shape.

The inkjet system is not particularly limited, and examples thereof include a charge controlling system of discharging an ink utilizing an electrostatic attraction force, a drop on demand system (pressure pulse system) utilizing a vibration pressure of a piezo element, an acoustic inkjet system utilizing radiation pressure for converting an electric signal into an acoustic beam and irradiating an ink with the beam, and a thermal inkjet system of heating an ink to form babbles and utilizing the generated pressure. In addition, the inkjet system includes a system of injecting an ink of a low concentration called photoink in a fine volume and in a large number, a system of improving image quality using a plurality of inks having substantially the same hue and different concentrations, and a system using a colorless transparent ink.

In the present invention, as irradiation means, in addition to a mercury lamp and a metal halide lamp, ultraviolet ray LED and ultraviolet ray laser can be used. Particularly, since the ultraviolet ray LED and the ultraviolet ray laser are low energies, and the ink composition requires a high curing sensitivity, the aforementioned ink composition is effective. For example, in the case of the ink composition of the present invention, a low energy of 200mJ/cm² or less can also be utilized as an integral light quantity of an ultraviolet ray. It is preferable that the ink composition is irradiated with an energy ray until 1 to 1,000 ms passes after the ink composition is discharged onto a recording medium. When the elapsed time is shorter than 1 ms, the distance between a head and a light source is too short, and the head is irradiated with an energy ray, leading to an unforeseen situation. On the other hand, when the elapsed time exceeds 1,000 ms, there is a tendency that image quality is deteriorated due to ink blur when many colors are utilized.

The present invention will be explained more specifically below based on examples. However, the present invention is not limited to these examples. Hereinafter, "part" means "part by mass".

### Examples

Components of ink compositions used in respective examples and comparative examples are shown in the following Table 1. In addition, indication of ink compositions of Tables 2 to 4 shows the same composition as that of the indication in parentheses in the kind column in Table 1.

**[Table 1]**

| Component | Kind | Trade name ·specification |
|---|---|---|
| Coloring material | Acidic carbon black pigment (MA-8) | Mitsubishi Chemical Corporation, MA-8 |
| | Nickel azo pigment (LA-2) | LA-2, manufactured by Ciba |
| | Quinacridone pigment (RT343D) | CINQUASIA Magenta RT-343-D, manufactured by Ciba |
| | Copper phthalocyanine pigment (P-BFS) | HOSTAPERM BLUE P-BFS, manufactured by Clariant |
| Pigment dispersant | Comb copolymer having basic functional group (SOLSPERSE33000) | SOLSPERSE 33000, manufactured by the Lubrizol Corporation |
| Monomer | Isooctyl acrylate (IO-A) | Sartomer SR440 (Tg: -54°C, ethylenic double bond /one molecule: 1, manufactured by Sartomer |
| | Phenoxyethylene glycol acrylate (PO-A) | NK ESTER AMP-10G (Tg: -22°C, ethylenic double bond/one molecule: 1), manufactured by Shin-Nakamura Chemical Co., Ltd. |
| | Tetraethylene glycol diacrylate (TEGDA) | Sartomer SR268 (Tg: 23°C, ethylenic double bond/one molecule: 2), manufactured by Sartomer |
| Oligomer | Aromatic difunctional urethane oligomer (EBECRYL210) | EBECRYL 210 (MW: 1500, ethylenic double bond/one molecule:2, elongation rate: 160%), manufactured by DAICEL-CYTEC Company LTD. |
| | Aliphatic difunctional urethane oligomer (EBECRYL270) | EBECRYL 270 (MW: 1500, ethylenic double bond/one molecule:2, elongation rate: 180%), manufactured by DAICEL-CYTEC Company LTD. |
| | Aliphatic difunctional urethane oligomer (EBECRYL284) | EBECRYL 284 (MW: 1200, ethylenic double bond/one molecule:2, elongation rate: 160%), manufactured by DAICEL-CYTEC Company LTD. |
| | Aliphatic difunctional urethane oligomer (ACTILNAE251) | ACTILANE251 (MW: 700, ethylenic double bond/one molecule: 3, elongation rate : 105%), manufactured by Across |
| | Aliphatic trifunctional urethane oligomer (CN929) | Sartomer CN929 (MW: 2500, ethylenic double bond/one molecule: 3, elongation rate; 130%), manufactured by Sasrtomer |
| Pohotopolymer ization initiator | 2,4,6-Trimethylbenzoyl-diphenyl-phosphine oxide (DAROCURE TPO) | DAROCURE TPO (monoacylphosphinoxide), manufactured by Ciba |
| | 2-Methyl-1-[4-(methylthio)phenyl]-2-morpholinopropane-1-one (IRGACURE907) | IRGACURE907 (a-aminoalkylphenone), manufactured by Ciba |
| | Isopropylthioxanthone (ITX-S) | ITX-S (thioxanthone) manufactured by Double Bond |
| Antigelling agent | Bis (1-oxyl-2, 2, 6, 6-tetramethylpiperidin-4-yl) sebacate (IRGASTAB UV10) | IRGASTAB UV10 (hindered amine), manufactured by Ciba |
| Surface tension conditioner | Polydimethylsiloxane having polyether-modified acryl group (BYK-UV3500) | BYK-UV3500, manufactured by BYK-Chemie |

### [Preparation of ink composition]

A coloring material, a pigment dispersant, and a monomer were weighed into a 100 cc plastic bottle in blending amounts shown in Tables 2 to 4, 100 parts of zirconia beads were added thereto, and the materials were dispersed by a paint conditioner (manufactured by Toyo Seiki ltd.) for 2 hours to obtain a primary dispersion. Then, the remaining components were added to the resulting primary dispersion in blending amounts shown in Tables 2 to 4, and the mixture was stirred using a magnetic stirrer for 30 minutes. After stirring, the mixture was filtered by suction using a glass filter (manufactured by Kiriyama Glass) to prepare an ink composition.

**[Table 2]**

| | | | Example 1 | Example 2 | Example 3 | Example 4 | Example 5 | Example 6 | Example 7 |
|---|---|---|---|---|---|---|---|---|---|
| Coloring material | MA-8 | (Part) | 2 | - | - | - | 2 | 2 | 2 |
| | LA-2 | (Part) | - | 2 | - | - | - | - | - |
| | RT343D | (Part) | - | - | 2 | - | - | - | - |
| | P-BFS | (Part) | - | - | - | 2 | - | | - |
| Pigment dispersant | SOLSPERSE33000 | (Part) | 1 | 1 | 1 | 1 | 1 | 1 | 1 |
| Monomer | IO-A | (Part) | 60 | 60 | 60 | 60 | 60 | 60 | 45 |
| | PO-A | (Part) | - | - | - | - | - | - | 10 |
| | TEGDA | (Part) | - | - | - | - | - | - | - |
| Oligomer | EBECRYL210 | (Part) | 25 | 25 | 25 | 25 | - | - | 25 |
| | EBECRYL270 | (Part) | - | - | - | - | 25 | - | - |
| | EBECRYL284 | (Part) | - | - | - | - | - | 25 | - |
| | ACTILANE251 | (Part) | - | - | - | - | - | - | - |
| | CN929 | (Part) | - | - | - | - | - | - | 5 |
| Photopolymerization initiator | DAROCURETPO | (Part) | - | - | - | - | - | - | - |
| | IRGACURE907 | (Part) | 9.78 | 9.78 | 9.78 | 9.78 | 9.78 | 9.78 | 9.78 |
| | ITX-S | (Part) | 2 | 2 | 2 | 2 | 2 | 2 | 2 |
| Antigelling agent | IRGASTAB UV10 | (Part) | 0.2 | 0.2 | 0.2 | 0.2 | 0.2 | 0.2 | 0.2 |
| Surface tension conditioner | BYK-UV3500 | (Part) | 0.02 | 0.02 | 0.02 | 0.02 | 0.02 | 0.02 | 0.02 |

**[Table 3]**

| | | | Example 8 | Example 9 | Example 10 | Example 11 | Example 12 | Comparative Example 1 | Comparative Example 2 |
|---|---|---|---|---|---|---|---|---|---|
| Coloring material | MA-8 | (Part) | 2 | 2 | 2 | 2 | 2 | 2 | 2 |
| | LA-2 | (Part) | - | - | - | - | - | - | - |
| | RT343D | (Part) | - | - | - | - | - | - | - |
| | P-BFS | (Part) | - | - | - | - | - | - | - |
| Pigment dispersant | SOLSPERSE33000 | (Part) | 1 | 1 | 1 | 1 | 1 | 1 | 1 |
| Monomer | IO-A | (Part) | 45 | 40 | 40 | 50 | 50 | - | 40 |
| | PO-A | (Part) | 10 | 7 | - | 10 | 10 | - | 35 |
| | TEGDA | (Part) | - | 8 | 20 | - | - | 60 | - |
| Oligomer | EBECRYL210 | (Part) | - | - | 25 | 25 | - | 25 | - |
| | EBECRYL270 | (Part) | 25 | - | - | - | - | - | 10 |
| | EBECRYL284 | (Part) | - | 25 | - | - | 25 | - | - |
| | ACTILANE251 | (Part) | - | - | - | - | - | - | - |
| | CN929 | (Part) | 5 | 5 | - | - | - | - | - |
| Photopolymerization initiator | DAROCURETPO | (Part) | - | - | - | 11.78 | - | 11.78 | - |
| | IRGACURE907 | (Part) | 9.78 | 9.78 | 9.78 | - | 9.98 | - | 9.78 |
| | ITX-S | (Part) | 2 | 2 | 2 | - | 2 | - | 2 |
| Antigelling agent | IRGASTAB UV10 | (Part) | 0.2 | 0.2 | 0.2 | 0.2 | - | 0.2 | 0.2 |
| Surface tension conditioner | BYK-UV3500 | (Part) | 0.02 | 0.02 | 0.02 | 0.02 | 0.02 | 0.02 | 0.02 |

**[Table 4]**

| | | | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Coloring material | MA-8 | (Part) | 2 | 2 | 2 | 2 | 2 | 2 | 2 |
| | LA-2 | (Part) | - | - | - | - | - | - | - |
| | RT343D | (Part) | - | - | - | - | - | - | - |
| | P-BFS | (Part) | - | - | - | - | - | - | - |
| Pigment dispersant | SOLSPERSE33000 | (Part) | 1 | 1 | 1 | 1 | 1 | 1 | 1 |
| Monomer | IO-A | (Part) | 5 | - | 50 | 50 | 50 | 50 | 50 |
| | PO-A | (Part) | - | - | 10 | 10 | 10 | 10 | 10 |
| | TEGDA | (Part) | - | 5 | - | 25 | - | - | - |
| Oligomer | EBECRYL210 | (Part) | - | - | - | - | - | 25 | 25 |
| | EBECRYL270 | (Part) | 45 | 45 | - | - | - | - | - |
| | EBECRYL284 | (Part) | - | - | - | - | - | - | - |
| | ACTILANE251 | (Part) | - | - | 25 | - | - | - | - |
| | CN929 | (Part) | 35 | 35 | - | - | 25 | - | - |
| Photopolymerization initiator | DAROCURETPO | (Part) | - | - | - | - | - | - | - |
| | IRGACURE907 | (Part) | 9.78 | 9.78 | 9.78 | 9.78 | 9.78 | 11.78 | 9.80 |
| | ITX-S | (Part) | 2 | 2 | 2 | 2 | 2 | - | 2 |
| Antigelling agent | IRGASTAB UV10 | (Part) | 0.2 | 0.2 | 0.2 | 0.2 | 0.2 | 0.2 | 0.2 |
| Surface tension conditioner | BYK-UV3500 | (Part) | 0.02 | 0.02 | 0.02 | 0.02 | 0.02 | 0.02 | - |

### [Assessment]

Regarding the thus prepared ink compositions of examples and comparative examples, the viscosity, dispersion average particle diameter, surface tension, and storage stability were measured as follows.

### [Viscosity]

The viscosity was measured at 25°C using an R100-type viscometer (manufactured by Toki Sangyo Co., Ltd.) under the condition of a rotation number of a cone of 20 rpm.

### [Dispersion average particle diameter]

The dispersion average particle diameter of pigment particles was measured using a particle size distribution measuring apparatus FPER-1000 (manufactured by Otsuka Electronics Co., Ltd.) .

### [Surface tension]

The surface tension at 25°C was measured using a fully automatic balance-type electro surface tension meter ESB-V (manufactured by Kyowa Kagaku).

### [Storage stability]

An ink composition was filled into an aluminum pouch having an interior side coated with polyethylene. A change in the viscosity of the ink composition after storage of this container at 70°C for 14 days, and the presence or absence of gellation was observed, and storage stability was assessed according to the following criteria.
Good: Change in viscosity of less than 10%.
Acceptable: Change in viscosity of 10% or more.
Poor: Gellation proceeds in a container and an ink is turned into a solid state.

Then, regarding respective ink compositions of examples and comparative examples, the following discharging property test was performed, and the continuous discharge property was assessed.

### [Continuous discharge property]

Using an inkjet recording apparatus equipped with a piezo-type inkjet nozzle, a discharge property test in which an ink was continuously discharged for 30 minutes was performed, and the continuous discharge property was assessed according to the following criteria. This inkjet recording apparatus is provided with an ink tank, a supply pipe, a front chamber ink tank right before a head, and a piezo head as an ink supply system. Upon discharge of an ink, the ink was heated with a conditioning system in the inkjet recording apparatus so that the viscosity of the ink became an optimal discharge viscosity of 8 to 13 mPa·s at the head. In addition, the ink jet recording apparatus was driven at a driving frequency of 28 KHz so that the ink can be injected at a liquid droplet size of about 6 pl, and a resolution of 1200 × 1200 dpi.
Good: No deteriorated discharge occurred.
Acceptable: Nozzle default did not occur, but satellite occurred.
Poor: Nozzle default occurred.

Then, regarding printed films which had been printed using respective ink compositions of examples and comparative examples, the curability, adherability and stretchability were assessed as follows.

### [Curability]

An ink composition was printed on each film made of polyvinyl chloride (PVC) or polycarbonate (PC) with a bar coater to form printed films having a thickness of 3 µm (bar coater: #6), respectively. These printed films were irradiated with an ultraviolet ray at a total irradiation light quantity of 500 mJ/cm², using ultraviolet ray LED (NCCU001E manufactured by Nichia Corporation) as an irradiation means to cure.

The thus cured printed films were touched with a finger, the presence or absence of attachment of the ink to the finger was observed visually, and curability was assessed according to the following criteria.
Good: No ink was attached to the finger.
Acceptable: No ink was attached to the finger, but a flaw was generated on a printed film surface.
Poor: The ink was attached to the finger.

### [Adherability]

An ink composition was printed on each film made of polyvinyl chloride (PVC) or polycarbonate (PC) with a bar coater to form printed films having a thickness of 3 µm (bar coater:#6), respectively. These printed films were irradiated with an ultraviolet ray at a total irradiation light quantity of 500 mJ/cm², using ultraviolet ray LED (NCCU001E manufactured by Nichia Corporation) as an irradiation means to cure.

The thus cured printed films were subjected to a grid test (1 mm square; 100 pieces) for confirming the peeled state with Sellotape (registered trade mark) according to JIS-K-5400. The number of peeled pieces in 100 was investigated, and adherability was assessed according to the following criteria.
Good: The number of peeled pieces was 10 or less in the grid test.
Acceptable: The number of peeled pieces was 11 to 20 in the grid test.
Poor: The number of peeled pieces was 21 or more in the grid test.

### [Stretchability]

An ink composition was printed on a film made of polyvinyl chloride (PVC) with a bar coater to form a printed film having a thickness of 3 µm (bar coater: #6). This printed film was irradiated with an ultraviolet ray at a total irradiation light quantity of 150 mJ/cm², using ultraviolet ray LED (NCCU001E manufactured by Nichia Corporation) as an irradiation means to cure. After curing, the printed film was cut into 10 mm ×120 mm strips to make a measurement sample.

A position 10 mm from one end in a long side direction of the thus prepared measurement sample was fixed on a sample table, a stretched length until cracking or pealing occurred on the printed film was measured, while a position 10 mm from the other end was pulled with a hand at a rate of 1 cm/s, and stretchability was assessed according to the following criteria. The measurement environmental temperature was room temperature.
Good: Even when the measurement sample was stretched 140% or more, cracking or peeling was not generated on the printed film.
Acceptable: Cracking or peeling was generated on the printed film while the measurement sample was stretched 130% to 140%.
Poor: Cracking or peeling was generated on the printed film while the measurement sample was stretched 120% to 130%.
Very Poor: Cracking or peeling was generate on the printed film before the measurement sample was stretched 120%.

Tables 5 to 7 show the results of the aforementioned assessment.

**[Table 5]**

| | | Example 1 | Example 2 | Example 3 | Example 4 | Example 5 | Example 6 | Example 7 |
|---|---|---|---|---|---|---|---|---|
| Viscosity | (mPa·s) | 43.0 | 43.2 | 43.1 | 43.5 | 45.2 | 44.5 | 50.1 |
| Dispersion average particle diameter | (nm) | 90.0 | 140.0 | 150.0 | 100.0 | 90.0 | 90.0 | 90.0 |
| Surface tension | (mN/m) | 29.8 | 30.0 | 29.9 | 30.1 | 30.2 | 30.4 | 29.6 |
| Storage stability | | Good | Good | Good | Good | Good | Good | Good |
| Continuous discharge property | | Good | Good | Good | Good | Good | Good | Good |
| Curability | PVC (3 µm) | Good | Good | Good | Good | Good | Good | Good |
| | PC (3 µm) | Good | Good | Good | Good | Good | Good | Good |
| Adherability | PVC (3 µm) | Good | Good | Good | Good | Good | Good | Good |
| | PC (3 µm) | Good | Good | Good | Good | Good | Good | Good |
| Stretchability | | Good | Good | Good | Good | Good | Good | Good |

**[Table 6]**

| | | Example 8 | Example 9 | Example 10 | Example 11 | Example 12 | Comparative Example 1 | Comparative Example 2 |
|---|---|---|---|---|---|---|---|---|
| Viscosity | (mPa· s) | 51.6 | 52.4 | 53.7 | 47.8 | 45.0 | 45.2 | 18.5 |
| Dispersion average particle diameter | (nm) | 90.0 | 90.0 | 90.0 | 90.0 | 90.0 | 90.0 | 90.0 |
| Surface tension | (mN/m) | 29.8 | 30.2 | 29.8 | 29.9 | 30.2 | 30.3 | 29.8 |
| Storage stability | | Good | Good | Good | Good | Poor | Good | Good |
| Continuous discharge property | | Good | Good | Good | Good | Good | Good | Good |
| Curability | PVC (3 µm) | Good | Good | Good | Good | Good | Good | Poor |
| | PC (3 µm) | Good | Good | Good | Good | Good | Good | Poor |
| Adherability | PVC (3 µm) | Good | Good | Good | Good | Good | Good | - |
| | PC (3 µm) | Good | Good | Good | Good | Good | Acceptable | - |
| Stretchability | | Good | Acceptable | Acceptable | Good | Good | Very Poor | - |

**[Table 7]**

| | | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|
| Viscosity | (mPa·s) | 80.5 | 84.3 | 40.8 | 18.5 | 38.5 | 42.8 | 43.2 |
| Dispersion average particle diameter | (nm) | 90.0 | 90.0 | 90.0 | 90.0 | 90.0 | 90.0 | 90.0 |
| Surface tension | (mN/m) | 30.4 | 29.9 | 30.0 | 30.2 | 30.5 | 30.1 | 35.0 |
| Storage stability | | Good | Good | Good | Good | Good | Good | Good |
| Continuous discharge property | | Poor | Poor | Good | Good | Good | Good | Poor |
| Curability | PVC (3 µm) | Good | Good | Good | Good | Good | Poor | Good |
| | PC (3 µm) | Good | Good | Good | Acceptable | Good | Poor | Good |
| Adherability | PVC (3 µm) | Good | Good | Good | Good | Good | - | Good |
| | PC (3 µm) | Good | Good | Acceptable | Acceptable | Good | - | Good |
| Stretchability | | Good | Good | Very Poor | Poor | Poor | - | Good |

As shown in the tables, it is understood that the ink compositions of examples have a low viscosity, and surface tension suitable for an inkjet system. For this reason, the ink compositions of examples are excellent in the continuous discharge property. In addition, it is understood that the ink compositions of examples containing an acylphosphine oxide initiator (C-1), or a mixed initiator (C-2) of an α-aminoalkylphenone initiator and a thioxanthone initiator are excellent in curability and adherability even when cured using low energy ultraviolet ray LED. It is understood that the ink compositions of examples have excellent stretchability, and can form a printed film in which cracking is hardly caused even when the printed film is stretched 130% or more after curing. Furthermore, it is understood that the ink compositions containing a hindered amine compound (F) having a 2,2,6,6-tetramethylpiperidinyl group as an antigelling agent have excellent storage stability.

To the contrary, it is understood that the ink compositions not containing an oligomer have a low viscosity, but are inferior in stretchability. In addition, it is understood that the ink compositions containing only a monomer having a high glass transition temperature even though containing an oligomer having a high elongation rate have reduced stretchability. In addition, it is understood that the ink compositions containing only an oligomer having a low elongation rate as an oligomer even though containing the monofunctional monomer (A) having a low glass transition temperature, or the ink compositions containing only a tri or more-functional oligomer are inferior in stretchability. For this reason, the ink compositions are not suitable in applications requiring high stretchability such as a marking film.

In addition, it is understood that the ink compositions containing the monofunctional monomer (A) having a low glass transition temperature, and a difunctional oligomer (B) having a high elongation rate, but such that the content of the monofunctioinl monomer (A) is small, and the content of the difunctional oligomer (B) having a high elongation rate is large, have a high viscosity, and are inferior in the continuous discharge property. Furthermore, it is understood that the ink compositions containing the monofunctional monomer (A) having a low glass transition temperature, and the difunctional oligomer (B) having a high elongation rate, but having a photopolymerization initiator made only of an α-aminoalkylphenone initiator are insufficient in curability. Still furthermore, it is understood that the ink compositions not containing the surface tension conditioner (D) have increased surface tension, and become an ink unsuitable for an inkjet system. In addition, since printed films formed using the ink compositions of Comparative Examples 2 and 8 were insufficient in curability, adherability and stretchability could not be assessed.

## Claims

1. An energy ray-curable inkjet ink composition capable of stretching a printed film after curing, comprising at least:
a coloring material,
a monofunctional monomer (A) having a glass transition temperature of lower than -25°C when a single monomer is polymerized, and having one ethylenic double bond,
a difunctional oligomer (B) having an elongation rate of 130% or more at 25°C when a single oligomer is polymerized, and having two ethylenic double bonds,
at least one kind of a photopolymerization initiator (C) selected from the group consisting of an acylphosphine oxide initiator (C-1), and a mixed initiator (C-2) of an α-aminoalkylphenone initiator and a thioxanthone initiator, and
a surface tension conditioner (D), wherein
a content of the monofunctional monomer (A) is 40 to 70% by mass, and a content of the difunctional oligomer (B) is 15 to 40% by mass, relative to the whole ink composition.

2. The energy ray-curable inkjet ink composition according to claim 1, wherein the difunctional oligomer (B) has a weight average molecular weight of 800 to 8,000.

3. The energy ray-curable inkjet ink composition according to claim 1 or 2, wherein the surface tension conditioner (D) comprises at least a silicone compound having a polydimethylsiloxane structure.

4. The energy ray-curable inkjet ink composition according to claim 3, wherein the silicone compound has an ethylenic double bond in a molecule.

5. The energy ray-curable inkjet ink composition according to any one of claims 1 to 4, wherein the ink composition further comprises a hindered amine compound (F) having a 2,2,6,6-tetramethylpiperidinyl group.

## Patentansprüche

1. Durch Energiestrahlen härtbare Tintenstrahl-Tintenzusammensetzung, die eine bedruckte Folie nach dem Härten dehnen kann, umfassend wenigstens:
ein Färbematerial;
ein monofunktionelles Monomer (A) mit einer Glasübergangstemperatur von weniger als -25 °C, wenn ein einzelnes Monomer polymerisiert wird, und mit einer einzigen ethylenischen Doppelbindung;
ein difunktionelles Oligomer (B) mit einer Dehnungsrate von 130% oder mehr bei 25 °C, wenn ein einzelnes Oligomer polymerisiert wird, und mit zwei ethylenischen Doppelbindungen;
wenigstens eine Art eines Photopolymerisationsstarters (C), der aus der Gruppe ausgewählt ist, die aus einem Acylphosphinoxid-Starter (C-1) und einem gemischten Starter (C-2) aus einem α-Aminoalkylphenon-Starter und einem Thioxanthon-Starter besteht; und
einen Oberflächenspannungskonditionierer (D), wobei
der Gehalt des monofunktionellen Monomers (A) 40 bis 70 Massen-% beträgt und der Gehalt des difunktionellen Oligomers (B) 15 bis 40 Massen-% beträgt, bezogen auf die gesamte Tintenzusammensetzung.

2. Durch Energiestrahlen härtbare Tintenstrahl-Tintenzusammensetzung gemäß Anspruch 1, wobei das difunktionelle Oligomer (B) ein Gewichtsmittel des Molekulargewichts von 800 bis 8000 aufweist.

3. Durch Energiestrahlen härtbare Tintenstrahl-Tintenzusammensetzung gemäß Anspruch 1 oder 2, wobei der Oberflächenspannungskonditionierer (D) wenigstens eine Silikonverbindung mit einer Polydimethylsiloxan-Struktur umfasst.

4. Durch Energiestrahlen härtbare Tintenstrahl-Tintenzusammensetzung gemäß Anspruch 3, wobei die Silikonverbindung eine ethylenische Doppelbindung in einem Molekül aufweist.

5. Durch Energiestrahlen härtbare Tintenstrahl-Tintenzusammensetzung gemäß einem der Ansprüche 1 bis 4, wobei die Tintenzusammensetzung weiterhin eine gehinderte Aminverbindung (F) mit einer 2,2,6,6-Tetramethylpiperidinylgruppe umfasst.

## Revendications

1. Composition d'encre pour jet d'encre durcissable par rayonnement actinique, capable d'étirer un film imprimé après durcissement, comprenant au moins :
un matériau colorant,
un monomère monofonctionnel (A) ayant une température de transition vitreuse de moins de -25 °C lorsqu'un seul monomère est polymérisé, et ayant une seule double liaison éthylénique,
un oligomère difonctionnel (B) ayant une valeur d'allongement de 130 % ou plus à 25 °C lorsqu'un seul oligomère est polymérisé, et ayant deux double liaisons éthyléniques,
au moins une espèce d'amorceur de photopolymérisation (C) choisi dans le groupe consistant en un amorceur oxyde d'acylphosphine (C-1) et un amorceur mixte (C-2) d'un amorceur α-aminoalkylphénone et d'un amorceur thioxanthone, et
un conditionneur de tension de surface (D), dans laquelle
la teneur du monomère monofonctionnel (A) est de 40 à 70 % en masse, et
la teneur de l'oligomère difonctionnel (B) est de 15 à 40 % en masse, par rapport à la composition d'encre entière.

2. Composition d'encre pour jet d'encre durcissable par rayonnement actinique selon la revendication 1, dans laquelle l'oligomère difonctionnel (B) présente un poids moléculaire moyen en poids de 800 à 8000.

3. Composition d'encre pour jet d'encre durcissable par rayonnement actinique selon la revendication 1 ou 2, dans laquelle le conditionneur de tension de surface (D) comprend au moins un composé silicone ayant une structure de polydiméthylsiloxane.

4. Composition d'encre pour jet d'encre durcissable par rayonnement actinique selon la revendication 3, dans laquelle le composé silicone présente une double liaison éthylénique dans une molécule.

5. Composition d'encre pour jet d'encre durcissable par rayonnement actinique selon l'une quelconque des revendications 1 à 4, dans laquelle la composition d'encre comprend en outre un composé amine encombrée (F) ayant un groupe 2,2,6,6-tétraméthylpiperidinyle.
